# FASCICULE DE BREVET EUROPEEN

(11) **EP 1 550 641 B1**
(45) Date de publication et mention de la délivrance du brevet: **16.04.2014**
(21) Numéro de dépôt: 04356201.6
(22) Date de dépôt: 21.12.2004
(51) Int. Cl.: C03C 25/48, C03C 25/42

(54) **Réseau destiné à la constitution d'écran attenuateur de lumiere et son procédé de fabrication**
Netz für den Aufbau eines Bildschirmabschwächers des Lichtes und dessen Verfahren zur Herstellung
Network intended for the constitution of screen attenuator of light and its process of manufacture

(30) Priorité: 23.12.2003 FR 0315269
(43) Date de publication de la demande: 06.07.2005
(73) Titulaire: Mermet, 38630 Veyrins Thuellin (FR)
(72) Inventeur: Christou, Philippe, 38110 Saint Clair de la Tour (FR); Pellet, Martine, 38440 Saint Jean de Bournay (FR)
(74) Mandataire: Sarlin, Laure V.

(56) Documents cités:
- EP-A- 0 669 418
- EP-A- 0 861 814
- US-A- 4 690 859

## Description

La présente invention est relative au domaine des réseaux de fils croisés pour posséder un facteur d'ouverture déterminé et destinés à constituer des rideaux ou stores pouvant être utilisés en disposition interne par rapport à une fenêtre, porte vitrée, ou baie vitrée. De tels rideaux ou stores ont généralement pour fonction d'atténuer le passage de la lumière dans le cas de fortes luminosités et de constituer une sorte d'écran.

L'art antérieur propose de réaliser de tels réseaux, par exemple à partir de deux nappes de fils entrelacés, formant une toile ou tissu. Les solutions de l'art antérieur sont le plus souvent réalisées à partir de fils de verre enduits avec du PVC puis tissés, ou bien encore à partir de fils de verre tissés puis enduits PVC. L'enduction de PVC représente jusqu'à 60% du poids total. Les produits obtenus selon de telles techniques sont chers et, de plus, en cas d'incendie, le PVC entraîne un dégagement d'HCl toxique. Dans le cas des produits obtenus par enduction après tissage, les trous de la grille sont en général très souvent bouchés et ce de manière aléatoire. Par contre, dans le cas des produits obtenus par enduction des fils de verre avant tissage, la lumière est gérée par l'écartement que l'on peut choisir entre les fils parallèles des différentes nappes, qui permet de gérer la grosseur des trous, également appelés mailles. En effet, l'enduction de PVC rend les fils de verre opaque, de sorte que la lumière ne passe pas au travers. Le XL Screen 5% vendu par la déposante est un exemple de ce type de produit.

EP 0 669 418 concerne un tissu screen exempt d'halogène, comprenant un revêtement ignifugeant à base d'au moins un agent ignifugeant et d'au moins un liant polymère, le revêtement représentant une proportion inférieure ou égale à 30 % en poids sec, par rapport à la masse totale du tissu.

Le document EP 0 861 814 décrit un matériau non-combustible à base de fibres de verre traité avec un revêtement contenant un copolymère acétate-éthylène et un agent ignifugeant.

Le brevet US 4 690 859 décrit un textile coupe feu comprenant un textile de fibres de verre revêtu d'un revêtement encapsulant permettant de limiter l'auto-abrasion fibres-fibres et qui adhère au textile même lorsque ce dernier est soumis à la chaleur et aux flammes.

Une autre solution consiste à traiter les fils de verre avec un liant vinylique associé à du polyuréthane et une charge minérale. Ce traitement est peu cher et permet de traiter le tissu dans son ensemble une fois tissé. Dans ce cas, les fils de verre sont tissés avant traitement, et traités par foulardage. La technique de foulardage permet de déposer des quantités de composition de traitement sur les fils correspondant à 20 - 30% du poids total. De ce fait, on obtient une opacité des fils moins importante. Dès lors, ces fils laissent passer la lumière, ce qui entraîne une moins bonne maîtrise du pouvoir atténuateur de lumière du réseau ainsi constitué. Le 1292 Fix78 vendu par la déposante est un exemple de tels produits. Ces produits sont principalement vendus sous la forme de lamelles et sont parfaitement adaptés pour la réalisation de rideaux à lamelles s'étendant verticalement. Néanmoins, ce type de produits ne convient pas pour la réalisation de rideaux ou stores enroulables (encore appelés "rollers").

Dans le domaine technique des peintures, il est connu d'ajouter une charge du type TiO₂, pour augmenter leur opacité, mais la transposition au traitement des réseaux de fils de verre n'est pas directement envisageable, étant donné que le TiO₂ abîme les fibres de verre qui sont alors plus facilement cassables, et ne présentent donc plus une résistance convenable à la pliure.

Dans ce contexte, la présente invention propose de fournir un réseau à base de nappe de fils de verre déterminant un facteur d'ouverture, et présentant à la fois une opacité satisfaisante et une résistance mécanique convenable.

Un autre objectif que se propose d'atteindre l'invention est de fournir un réseau traité avec une composition exempte d'halogène et donc répondant aux exigences liées à l'environnement.

Par ailleurs, l'invention se propose de fournir un produit pouvant être obtenu de façon aisée et à un coût de revient raisonnable.

De plus, la présente invention vise à fournir un réseau pouvant être facilement enroulé et donc être commercialisé pour la réalisation de store ou rideau enroulable.

Dans ce contexte, la présente invention a pour objet un réseau, destiné à la constitution d'écran atténuateur de lumière, constitué d'au moins deux nappes de fils de verre croisés et associés pour former une grille ajourée de facteur d'ouverture déterminé et enduite avec un revêtement de nature polymérique contenant des particules de TiO₂, les fils de verre étant séparés des particules de TiO₂ par au moins une couche de liant polymérique.

Au sens de l'invention, la grille de fils de verre peut être réalisée par tissage de deux nappes de fils de verre entrelacés. Il peut également être prévu que cette grille soit constituée de deux nappes de fils de verre superposées sans entrelacement, la liaison entre les deux nappes pouvant être réalisée par tout moyen approprié. Dans les deux cas, les fils de verre sont parallèles entre eux dans chacune des nappes et sont écartés d'un pas d'espacement constant ou variable, comme décrit, par exemple, dans WO 99/43879. Les fils se croisent, avec ou sans entrelacement, de façon à former des mailles ouvertes de facteur d'ouverture déterminé. Le plus souvent, l'orientation des fils dans chacune des nappes est tel que les fils se croisent selon un angle de 90°. Les méthodes de confection de telles grilles sont bien connues de l'homme du métier.

Le facteur d'ouverture, également nommé taux d'ouverture (OF) correspond au rapport de la surface des trous ou mailles sur la surface totale du réseau. Ce facteur d'ouverture est fonction de l'application visée et est de préférence compris entre 2 et 20% et de préférence de l'ordre de 5% ou 3%. Les réseaux dits techniques présentent généralement un facteur d'ouverture plus faible et laissent également passer moins de lumière (à taux d'ouverture constant) que les réseaux dits décoratifs.

Le terme « enduit » est utilisé dans la présente invention, pour désigner un fil qui présente un revêtement en surface. Le terme « enduit » n'exclut néanmoins pas le fait que le revêtement puisse également imprégner le fil, c'est à dire que le revêtement, dans ce cas, se trouve à la fois en surface du fil et pénètre sur au moins une partie de son épaisseur.

Selon une des caractéristiques essentielles de l'invention, la grille de fils de verre est enduite avec un revêtement de nature polymérique contenant des particules de TiO₂, les fils de verre étant séparés des particules de TiO₂ par au moins une couche de liant polymérique. De ce fait, les fils sont d'une part rendus opaques pour faciliter la maîtrise de la lumière et d'autre part, ne sont pas au contact du TiO₂, ce qui permet d'assurer leur protection. Les particules de TiO₂ apportent l'opacité au réseau et présentent, par exemple, un diamètre moyen inférieur à 100µm, préférablement inférieur à 20µm. Le revêtement représente avantageusement, en taux de matière sèche, de 10 à 33 % du poids total du réseau.

La couche de polymère séparant les fils de verre des particules de TiO₂ doit donc être suffisamment épaisse pour protéger les fils de verre vis à vis du dioxyde de titane apportant l'opacité. Elle représente, de préférence, au moins 4 % du poids total du réseau.

De façon avantageuse, le revêtement comporte :
- de 90 à 100 % en poids de :
   - de 5 à 20 % en poids de TiO₂,
   - de 25 à 35 % en poids d'agent ignifugeant, et
   - de 50 à 65 % de liants polymériques,
- et de 0 à 10 % en poids de pigments (autre que TiO₂).

Les différents pigments ajoutés permettent d'ajuster la couleur que l'on souhaite donner au réseau.

Le revêtement utilisé dans l'invention est avantageusement exempt d'halogène, on évitera donc, de préférence, l'utilisation de pigment ou d'agent ignifugeant halogéné. Par exempt d'halogène, on entend qu'il ne contient aucun dérivé halogéné (fluoré, bromé, chloré ou iodé).

De façon avantageuse, le revêtement comprend, notamment en tant que liant, un mélange de liant acrylique et/ou de liant vinylique et de liant polyuréthane. L'ensemble des liants acryliques et vinyliques représente avantageusement 40% en poids du traitement global. Les liants polyuréthanes représentent quant à eux avantageusement de 12 à 15% du traitement global. Le liant polyuréthane permet d'avoir un réseau présentant une meilleure résistance à la pliure et au marquage.

Selon un mode de réalisation préféré, le revêtement est multicouche, la couche directement au contact des fils de verre étant exempte de TiO₂ : il se présente sous la forme d'au moins deux couches et avantageusement de trois couches. Ce revêtement tricouche comporte :
a. une couche (a), dite de teinture, en surface des nappes de fils, qui imprègne éventuellement les fils sur une partie de leur épaisseur, destinée à participer à la teinture des fils de verre constitutifs du réseau,
b. une couche (b), dite de protection intermédiaire, destinée à protéger les fils de verre constitutifs du réseau,
c. couche (c), dite d'opacité, constituant la surface externe du réseau, destinée à opacifier les fils de verre.

De préférence, la couche (a) de teinture représente, en taux de matière sèche, de 0 à 3 % du poids total du réseau, la couche (b) de protection représente, en taux de matière sèche, de 6 à 15 % du poids total du réseau et la couche (c) d'opacité représente, en taux de matière sèche, de 4 à 15 % du poids total du réseau. Le rôle de la couche (c) est principalement d'apporter l'opacité grâce au TiO₂. Le rôle de la couche (b) est principalement d'apporter la protection des fils de verre vis à vis du TiO₂ (c). La couche (a) vient pour compléter la teinture.

La couche (c) peut être présente sur toute la surface de la grille, si elle est par exemple obtenue par foulardage, ou seulement sur une de ses grandes faces, si elle est obtenue par enduction. Dans ce dernier cas, la couleur des différentes couches sera choisie de façon à obtenir une grille bicolore dont les deux grandes faces présentent des couleurs différentes.

La présente invention propose donc, de façon avantageuse, de soumettre une grille de fils de verre à trois revêtements colorés successifs, un premier traitement (a) apportant de la couleur, un deuxième traitement (b) apportant de la couleur et de la protection, et un troisième traitement (c) apportant la couleur et l'opacité. On peut envisager de supprimer le premier traitement.

Classiquement, les réseaux selon l'invention pourront être fabriqués par des procédés d'enduction utilisant le foulardage, c'est à dire par trempage de la grille de fils de verre dans un bain contenant la solution de traitement, puis élimination de l'excès sur rouleaux (nommés foulards dans le langage de l'homme du métier). Dans le cas de la constitution de réseau, ce type de procédé standard entraîne le plus souvent l'obturation des trous ou mailles. C'est pourquoi, on utilise une aspiration après les rouleaux. Néanmoins, cette étape d'aspiration entraîne des pertes importantes des produits utilisés pour le traitement, pose des problèmes pour traiter les grandes longueurs de tissu et augmente les risques de défaut d'aspect sur le tissu.

Pour résoudre ce problème, selon un autre de ses aspects, l'invention propose d'utiliser un agent anti-mousse dans les traitements par foulardage en bain dont la viscosité et la présence d'agents tensioactifs entraînent l'obturation des mailles, cet agent permettant aux mailles de se déboucher seules, sans la mise en oeuvre d'un procédé d'aspiration. On pourra utiliser tout agent anti-mousse classique bien connu de l'homme du métier et de façon avantageuse, ceux de la famille des polysiloxanes et notamment le BYK® -094 commercialisé par BYK Chemie, ou de la famille des copolymères polyéther siloxane et notamment le TEGO® Foamex 825 commercialisé par la société DEGUSSA. Parmi les agents anti-mousse testés, le BYK®-094 est particulièrement avantageux au sens de l'invention.

La présente invention a également pour objet un procédé de fabrication d'un réseau réalisé à partir d'au moins deux nappes de fils de verre croisés, associées pour former une grille ajourée de facteur d'ouverture déterminé, comprenant les étapes successives suivantes :
- réaliser un traitement (b) par trempage de la grille dans un bain contenant, en % en poids sur l'extrait sec :
   ○ 35 à 55 % de liant vinylique,
   ○ 5 à 25 % de liant polyuréthane
   ○ 20 à 50 % d'agent ignifugeant
   ○ 0,5 à 3 % d'agent anti-mousse
   ○ 0 à 0,5 % de pigments
   sous la forme d'une émulsion/suspension aqueuse dont l'extrait sec représente de 27 à 47 %, puis passage de la grille ainsi traitée entre deux rouleaux et séchage et à obtenir une couche de traitement (b) représentant, en taux de matière sèche, de 6 à 15% du poids total du réseau,
- réaliser un traitement (c₁) par trempage de la grille traitée obtenue à l'étape précédente dans un bain contenant, en % en poids sur l'extrait sec:
   ○ 25 à 45 % de liant vinylique
   ○ 5 à 25 % de liant polyuréthane
   ○ 10 à 30 % d'agent ignifugeant
   ○ 20 à 40 % de dioxyde de titane (TiO₂)
   ○ 0,5 à 3 % d'agent anti-mousse
   ○ 0 à 0,5 % de pigments autres que TiO₂
   sous la forme d'une émulsion/suspension aqueuse dont l'extrait sec représente de 27 à 47 %, puis passage de la grille ainsi traitée entre deux rouleaux et séchage et à obtenir une couche de traitement (c₁) représentant, en taux de matière sèche, de 4 à 15% du poids total du réseau.

Le bain correspondant au traitement (b) présente, par exemple, une viscosité comprise entre 100 et 300 cps (Viscosimètre type Brookfield, mobile 4, vitesse 100 - mesure à température ambiante 23±3°C).

Le bain correspondant au traitement (c₁) présente, par exemple, une viscosité comprise entre 200 et 400 cps (Viscosimètre type Brookfield, mobile 4, vitesse 100 - mesure à température ambiante 23±3°C).

Le traitement (b) sera de préférence précédé d'un traitement (a) réalisé par trempage du réseau dans un bain contenant un liant de teinture à raison de 30 à 99 % en poids sur l'extrait sec, un pigment à raison de 1 à 70 % en poids sur l'extrait sec, sous la forme d'une émulsion/suspension aqueuse dont l'extrait sec représente de 1 à 5 %, puis passage de la grille ainsi traitée entre deux rouleaux et séchage. Ce bain présente, par exemple, une viscosité comprise entre 0 et 10 cps (Viscosimètre type Brookfield, mobile 4, vitesse 100 - mesure à température ambiante 23±3°C).

Les bains correspondants aux traitements (b) et (c₁) se présentent sous la forme d'émulsion aqueuse des liants polymériques et contiennent des tensioactifs destinés à stabiliser ces émulsions et donc éviter la sédimentation. L'agent anti-mousse est donc utilisé-dans les bains de ces deux derniers traitements.

Après chaque foulardage (trempage + passage entre les foulards dont l'écartement et la pression sont ajustés en fonction de la quantité de revêtement que l'on souhaite garder sur les fils de verre), le réseau est soumis à une opération de séchage, à des températures de l'ordre de 150-170 °C le plus souvent.

Il est également possible de réaliser après le traitement (c₁) un traitement (c₂) par enduction de la grille sur une seule de ses faces, avec une formulation contenant, en % sur l'extrait sec :
- 15 à 30 % de liant vinylique,
- 5 à 15 % de liant polyuréthane,
- 15 à 25 % d'agent ignifugeant,
- 40 à 55 % de dioxyde de titane,
- 2 à 5 % d'épaississant, par exemple du type copolymère acrylique,
- 0 à 0,5 % de pigments autres que TiO₂,
puis séchage, de façon à obtenir une couche de traitement (c₂) sur une seule des grandes faces de la grille, représentant en taux de matière sèche de 5 à 25 % du poids total du réseau.

Selon un autre de ses aspects, l'invention a également pour objet un procédé de fabrication d'un réseau, réalisé à partir d'au moins deux nappes de fils de verre croisés, associés pour former une grille ajourée de facteur d'ouverture déterminé, comprenant les étapes successives suivantes :
- réaliser un traitement (a) par trempage du réseau dans un bain contenant un liant de teinture à raison de 30 à 99 % en poids sur l'extrait sec, un pigment à raison de 1 à 70 % en poids sur l'extrait sec, sous la forme d'une émulsion/suspension aqueuse dont l'extrait sec représente de 1 à 5 %, puis passage de la grille ainsi traitée entre deux rouleaux et séchage,
- réaliser un traitement (b) par trempage de la grille dans un bain contenant, en % en poids sur l'extrait sec :
   ○ 35 à 55 % de liant vinylique,
   ○ 5 à 25 % de liant polyuréthane
   ○ 20 à 50 % d'agent ignifugeant
   ○ 0,5 à 3 % d'agent anti-mousse
   ○ 0 à 0,5 % de pigments
   sous la forme d'une émulsion/suspension aqueuse dont l'extrait sec représente de 27 à 47 %, puis passage de la grille ainsi traitée entre deux rouleaux et séchage et de façon à obtenir une couche de traitement (b) représentant, en taux de matière sèche, de 6 à 15 % du poids total du réseau,
- réaliser un traitement (c₂) par enduction de la grille sur une seule de ses faces, avec une formulation contenant, en % sur l'extrait sec :
   - 15 à 30 % de liant vinylique,
   - 5 à 15 % de liant polyuréthane,
   - 15 à 25 % d'agent ignifugeant,
   - 40 à 55 % de dioxyde de titane,
   - 2 à 5 % d'épaississant, par exemple du type copolymère acrylique,
   - 0 à 0,5 % de pigments autres que TiO₂,
   puis séchage, de façon à obtenir une couche de traitement (c₂) sur une seule des grandes faces de la grille, représentant en taux de matière sèche de 5 à 25 % du poids total du réseau.

Les deux dernières variantes du procédé décrites ci-dessus sont utilisées dans le cas où l'on souhaite obtenir une grille bicolore.

Les pigments éventuellement présents dans chacun des traitements (a), (b), (c₂), et éventuellement (c₁) sont donc choisis de façon à ce que chacune des grandes faces de la grille soit de couleur différente.

Le traitement (c₂) est réalisé par exemple par la technique d'enduction par cadre rotatif suivi d'un séchage.

La formulation correspondant au traitement (c₂) présente, par exemple, une viscosité comprise entre 4000 et 8000 cps (viscosité type Brookfield, mobile 5, vitesse 50 mesure à température ambiante 23±3° C).

L'agent épaississant est, par exemple, du type copolymère acrylique, notamment choisi parmi DV53 (COATEX) et DV 46 (COATEX) ou épaississant PU non ionique : DV 202 (COATEX), TEGO VISCOPLUS 3060 (TEGO). L'épaississant donne à la formulation un caractère pseudoplastique ce qui a pour intérêt de figer la formulation très rapidement une fois cisaillé et donc d'éviter qu'elle ne passe sur l'autre face de la grille, ce qui permet d'obtenir deux faces colorées bien distinctes.

A titre de liant de teinture utilisé dans le traitement (a), on pourra citer la famille des liants acryliques et notamment PRINTOFIX CFN (Société CLAIRANT), HELIZARIN FWT (Société BASF), LIANT ACM (Société MINERVA), des liants vinyliques et notamment UKANOL GT (Société SCHILL), LIANT 521 (Société MINERVA).

A titre de liant vinylique utilisé dans les traitements (b), et (c₁) et (c₂), on pourra citer les homopolymères d'acétate de vinyle, les copolymères d'acétate de vinyle et plus particulièrement les copolymères d'acétate de vinyle et d'éthylène, notamment les VINAMUL 3265, VINAMUL 1439, VINAMUL 3301, de la société VINAMUL ou le RHENAPPRET VEA de la société THOR.

A titre de liant polyuréthane, utilisé dans les traitements (b), et (c₁) et (c₂), on pourra citer les polyuréthanes aromatiques, les polyuréthanes aliphatiques. Ces derniers sont particulièrement préférés, notamment le RC 95871 de la société ROTA, le RHENAPPRET PUM de la société THOR, ou bien le U210 de la société ALBERDINGK.

A titre d'agent ignifugeant, on pourra citer de façon non limitative les polyphosphates d'ammonium traités en surface ou non, comme les FR CROS 481, 480, 485, 484, 486 487, 489 de la société Budenheim, ou l'AP422 de la société Clariant ou le Phoscheck P30 de la société Brenntag, les dérivés bores ou phosphatés de la mélamine, comme les BUDIT 310, 311, 312, 313, 314 ou 315 de la société Budenheim, les dérivés stannés du zinc, comme le Flamtard H ou le Flamtard S de la société Alcan ou les dérivés bores du Zinc comme les Borates de zinc Flamtard Z10 ou Z15 de la société Borax. Les agents ignifugeants non halogènes sont bien entendu préférés.

Le terme « pigment » utilisé ne comprend bien entendu pas le TiO₂. Tous pigments classiques utilisés pour la teinture de fibres ou fils de verre pourront être utilisés.

Les réseaux selon l'invention permettent de bien maîtriser le passage de la lumière qui dépend essentiellement du taux d'ouverture et de la couleur du réseau et donc de la clarté de la teinte (habituellement notée "L"), mais peu de la « transparence » des fils qui sont suffisamment opaques.

Les réseaux selon l'invention présentent également un bon enroulement. Le bon enroulement d'un réseau peut être déterminé selon le test d'enroulement décrit ci-après. On utilise une toile de 1,50 m de large et de 2,00 m de haut. Le store est confectionné selon les règles de l'art, avec une barre de charge et monté sur un système d'enroulement.

Les critères permettant de dire qu'un enroulement est bon sont les suivants :
Après enroulement, s'il se forme un cône de tissu sur un des cotés, celui-ci ne doit pas excéder 5mm de "hauteur" et l'éventuel non parallélisme de la barre de charge ne doit pas non plus excéder 5mm.

Par ailleurs, les réseaux selon l'invention présentant un traitement à base de polyuréthane ont une bonne résistance à la pliure.

Les réseaux selon l'invention sont donc parfaitement adaptés pour la constitution d'écran atténuateur de lumière. Ils peuvent être fabriqués et enroulés sur une grande largeur. Ces réseaux, fabriqués notamment sous forme de rouleaux, peuvent être utilisés pour la fabrication de stores ou rideaux enroulables : le réseau est alors associé à un mandrin d'enroulement s'étendant parallèlement à l'une des séries de fils constitutifs de la grille formant le réseau.

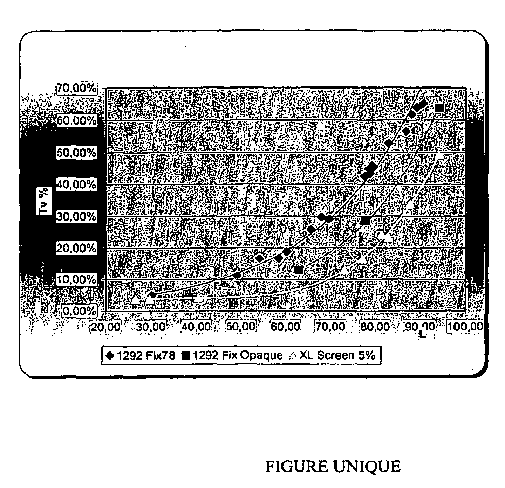

Les exemples, en référence à la **Figure unique** annexée, ci-après illustrent l'invention mais n'ont aucun caractère limitatif. Cette. **Figure unique** présente la courbe d'évolution du taux de transmission de lumière visible (%Tv) en fonction de la clarté de la couleur (L mesurée par colorimétrie) obtenue pour des réseaux du type XL Screen 5% et 1292 Fix78 de l'art antérieur et des réseaux conformes à l'invention.

### Exemple 1 de réalisation

Une grille de fils de verre de 135 g/m² et de 5% d'OF est produite par la société HEXCEL sous la référence 1292. Cette grille est traitée au foulard avec les bains n°1, 2 et 3 décrits ci-dessous sur une ligne de traitement de marque Proctor, à une vitesse de 12m/min, les fours de séchage étant régulés à 150°C et la pression des foulards étant contrôlée par des verniers réglés à 10,2. Le temps de séchage est de l'ordre de 2 minutes.
**Bain n°1 : GRIS** - Quantités pour 1 litre de bain
   *Helizarin Vert BT (BASF) 0,10g*
   *Helizarin Gris BT96 (BASF) 0,65g*
   *Helizarin Noir TT (BASF) 2,20g*
   *Jaune Or Minerprint (MINERVA) 0,15g*
   Antimousee DC 544 (Dow-Corning) 0,05g
   HELIZARIN FWT (BASF) 70,0g
   TRITON® X155 (DOW) 5g
   EAU q.s.p. 1 litre
**Bain n°2 : GRIS -** Quantités pour 100 Kg de bain
   EAU 36,4 Kg
   FR CROSS 484 (Budenheim) 14,8 Kg
   VINAMUL 3265 (VINAMUL) 18,8 Kg
   VINAMUL 1439 (VINAMUL) 11,5 Kg
   RC 95871 (ROTTA) 18,5 Kg
   BYK® 094 (BYK Chemie) 0,5 Kg
   *HELIZARIN NOIR TT (BASF) 0,1 Kg*
   *HELIZARIN BLEU RT94 (BASF) 0, 035Kg*
   *ROUGE AGH (Holliday Dispersions) 0,025 Kg*
**Bain n°3 : GRIS -** Quantités pour 100 Kg de bain
   EAU 32,7 Kg
   PHOSCHECK P30 (BRENNTAG) 7,4 Kg
   BLANC 51 (MINERVA) 19,8 Kg (dispersion de TiO₂)
   RHENAPRET VEA (THOR) 21,6 Kg
   RC 95871 (ROTTA) 18,5 Kg
   BYK® 094 (BYK Chemie) 0,5 Kg
   *HELIZARIN NOIR TT (BASF) 0,1 Kg*
   *HELIZARIN BLEU RT94 (BASF) 0,035Kg*
   *ROUGE AGH (Holliday Dispersions) 0,025 Kg*

### Exemple 2 de variation pigmentaire (pour autre coloris)

Pour obtenir un réseau traité de couleur beige, les formulations de l'exemple 1 sont modifiés en remplaçant les pigments mentionnés en italique par la formulation pigmentaire dans les trois bains :
HELIZARIN BRUN FONCE TT (BASF) 0,090Kg
HELIZARIN JAUNE BRILLANT RRT (BASF) 0,010Kg
ORANGE Imperon KGR (HOECHST) 0,007Kg

### Exemple 3

On procède comme pour l'exemple 1, en traitant avec les bains n° 4, 5 et 6 décrits ci-dessous et la pression des foulards est contrôlée par des verniers réglés à 9.

**Bain n°4 : ARGENT - Quantités pour 1 litre de bain**

| | |
|---|---|
| *Helizarin Gris BT96 (BASF)* | *0,20g* |
| *Helizarin Brun foncé TT (BASF)* | *0,30g* |
| Antimousee DC 544 (Dow-Corning) | 0,05g |
| PRINTOFIX CFN (Clariant) | 70,0g |
| TRITON® X155 (DOW) | 5g |
| EAU | q.s.p. 1 litre |

**Bain n°5 : ARGENT - Quantités pour 100 Kg de bain**

| | |
|---|---|
| EAU | 36,0 Kg |
| FR CROSS 484 (Budenheim) | 16 Kg |
| VINAMUL 3301 (VINAMUL) | 19,5 Kg |
| VINAMUL 1439 (VINAMUL) | 11,0 Kg |
| RC 95871 (ROTTA) | 17,5 Kg |
| BYK® 094 (BYK Chemie) | 1,0 Kg |
| *Helizarin Gris BT96 (BASF)* | *0,20g* |
| *Helizarin Brun foncé TT (BASF)* | *0,30g* |

**Bain n°6 : ARGENT - Quantités pour 100 Kg de bain**

| | |
|---|---|
| EAU | 38,0 Kg |
| PHOSCHECK P30 (BRENNTAG) | 10,3 Kg |
| BLANC NO (MINERVA) | 14,0 Kg (dispersion de TiO₂) |
| VINAMUL 3301 (VINAMUL) | 22,0 Kg |
| RC 95871 (ROTTA) | 15,7 Kg |
| BYK® 094 (BYK Chemie) | 1,0 Kg |
| *Helizarin Gris BT96 (BASF)* | *0,20g* |
| *Helizarin Brun foncé TT (BASF)* | *0,30g* |

### Exemple 4 : variation du facteur d'ouverture

Une grille de fil de verre de 151 g/m² et de 3% d'OF est produite par la société HEXCEL sous la référence X4128. Cette grille est traitée au foulard avec les bains n°4, 5 et 6 tels que définis à l'exemple 3 sur une ligne de traitement de marque Proctor, à une vitesse de 12m/min, les fours de séchage étant régulés à 150°C et la pression des foulards étant contrôlée par des verniers réglés à 8. Le temps de séchage est de l'ordre de 2 minutes.

### Exemple 5 : variation de couleur sur une face

Une grille de fil de verre de 135 g/m² et de 5% d'OF est produite par la société HEXCEL sous la référence 1292. Cette grille est traitée au foulard avec les bains n°4 et 5 tels que définis à l'exemple 3 sur une ligne de traitement de marque Proctor, à une vitesse de 12m/min, les fours de séchage étant régulés à 150°C et la pression des foulards étant contrôlée par des verniers réglés à 9. Le temps de séchage est de l'ordre de 2 minutes.

La grille obtenue présente un grammage entre 150 et 160 g/m². Elle est alors soumise à un traitement par enduction avec la formulation 1 définie ci-après.

L'enduction au cadre rotatif: la pâte d'enduction à déposer sur le tissu, est distribuée par une racle d'alimentation à l'intérieur du cadre. Elle est poussée à travers les trous du cadre par une baguette métallique (de dimension variable) plaquée à l'intérieur du cadre par pression magnétique.

Le tissu enduit est ensuite séché dans un four à circulation d'air.

Condition de traitement :
Cadre utilisé : marque PIOLAT, ouverture 12,5%, diamètre des trous 70µm.
Vitesse de traitement 15m/min.
Baguette utilisée: ZIMMER, striée avec un diamètre 12.
Poids de déposé: 15-18 g/m².

**Formulation 1 : BLANC - Quantités pour 100 Kg de bain**

| | |
|---|---|
| EAU | 55,0 Kg |
| DISPERBYK ® | 1,0 kg |
| PHOSCHEK P30 | 5,4 Kg |
| VINAMUL 3301 (VINAMUL) | 11,4 Kg |
| RC 95871 (ROTTA) | 8,2 Kg |
| BYK® 094 (BYK Chemie) | 1,5 Kg |
| *TIOXYDE TR92* | *13,6 Kg* |
| *COATEX DV 53* | *3,4Kg* |
| *AMONIAQUE TECH* | *0,5 kg* |

La viscosité est de 6000cps (viscosité brookfield)
Les produits obtenus permettent de passer le test au feu M1 selon la norme NFP 92 503 et B1 selon la norme 4102-1. Les matériaux sont B1 s'ils satisfont au contrôle de la cheminée de réaction au feu et remplissent les conditions concernant les matériaux de la classe B2.

Le %TV est la proportion de lumière visible (400 à 800 nm de longueur d'onde) transmise à travers le réseau. Pour mesurer cette caractéristique, on utilise un Luxmètre (par exemple : LX102 Light Meter de la société LUTRON) avec lequel la quantité de lumière exprimée en Lux est mesurée, tout d'abord sur une table lumineuse possédant un verre dépoli destiné à fournir un éclairage diffus (en posant la cellule au contact de la vitre dépolie), puis ensuite en intercalant entre la vitre dépolie et la sonde du luxmètre le réseau dont on veut mesurer le %TV. En faisant le rapport de la seconde mesure divisée par la première mesure, on obtient la proportion de lumière transmise.

L définit la clarté d'une teinte. L est défini par le système C.I.E.L.*a*b* : les trois coordonnées colorimétriques X, Y et Z sont reprises du tableau des normes C.I.E. et Y seul est transposé en L. L indique une « luminosité psychométrique » - ou « légèreté » - définie en fonction d'une grandeur psychophysique (ou valeur chromatique) choisie de façon à rendre compte d'intervalles égaux entre les couleurs liés à cette "légèreté". Les valeurs de L s'échelonnent sur cent degrés entre 0 pour le noir et 100 pour le blanc. Le diagramme C.I.E.L.*a*b* est souvent nommé « diagramme chromatique psychométrique » : les couleurs sont définies selon deux axes de coordonnées à angle droit. Le plan ainsi défini est lui-même perpendiculaire à l'axe achromatique.

L est mesuré au moyen d'un spectrophotocolorimètre.

Les courbes de %TV en fonction de L présentées sur la **Figure unique** montrent que les réseaux selon l'invention permettent d'obtenir des %Tv se rapprochant de ceux des réseaux enduits PVC de l'art antérieur. Cela signifie que %Tv dépend principalement du taux d'ouverture et de la couleur du réseau et donc de L, mais beaucoup moins de la « transparence » des fils, comme c'est le cas pour les produits de l'art antérieur du type 1292 Fix78.

On peut définir le critère "L 10%" : Valeur de L pour laquelle %TV = 10%

Plus "L _{10%}" est élevé, meilleur est le produit (si la lumière ne passait que par les trous du réseau, %TV devrait être égale au taux d'ouverture du tissu (surface des trous/surface totale) qui est de 5%)

Si on se rapporte aux courbes de la Figure unique, on a :
1292 Fix78 "L 10%" = 48
réseau selon l'invention "L 10%" = 64
XL-Screen 5% "L 10%" = 69

On peut considérer que le type de réseau est satisfaisant en termes de maîtrise du passage de la lumière quand "L 10%" > 60.

## Revendications

1. Réseau, destiné à la constitution d'écran atténuateur de lumière, constitué d'au moins deux nappes de fils de verre croisés et associées pour former une grille ajourée de facteur d'ouverture déterminé et enduite avec un revêtement de nature polymérique **caractérisé en ce que** le revêtement de nature polymérique contient des particules de TiO₂, et **en ce que** les fils de verre sont séparés des particules de TiO₂ par au moins une couche de liant polymérique.

2. Réseau selon la revendication 1, **caractérisé en ce que** le revêtement est sans halogène.

3. Réseau selon la revendication 1 ou 2, **caractérisé en ce que** le revêtement représente, en taux de matière sèche, de 10 à 33 % du poids total du réseau.

4. Réseau selon l'une des revendications 1 à 3, **caractérisé en ce que** la couche de polymère séparant les fils de verre des particules de TiO₂ représente au moins 4 % du poids total du réseau.

5. Réseau selon l'une des revendications 1 à 4, **caractérisé en ce que** les particules de TiO₂ présentent un diamètre moyen inférieur à 100µm, préférablement inférieur à 20µm.

6. Réseau selon l'une des revendications 1 à 5, **caractérisé en ce que** le revêtement comporte :
- de 90 à 100 % en poids de :
- de 5 à 20 % en poids de TiO₂,
- de 25 à 35 % en poids d'agent ignifugeant, et
- de 50 à 65 % de liants polymériques,
- et de 0 à 10 % en poids de pigment (autre que TiO₂).

7. Réseau selon l'une des revendications 1 à 6, **caractérisé en ce que** le revêtement comprend, notamment en tant que liant, un mélange de liant acrylique et/ou de liant vinylique et de liant polyuréthane.

8. Réseau selon l'une des revendications 1 à 7, **caractérisé en ce que** le revêtement comporte au moins deux couches.

9. Réseau selon la revendication 8, **caractérisé en ce que** le revêtement comporte au moins trois couches :
a. une couche (a), dite de teinture en surface des nappes de fils, qui imprègne éventuellement les fils sur une partie de leur épaisseur, destinée à participer à la teinture des fils de verre constitutifs du réseau,
b. une couche (b), dite de protection intermédiaire, destinée à protéger les fils de verre constitutifs du réseau,
c. couche (c), dite d'opacité, constituant la surface externe du réseau, destinée à opacifier les fils de verre.

10. Réseau selon la revendication 9, **caractérisé en ce que** la couche (a) de teinture représente, en taux de matière sèche, de 0 à 3 % du poids total du réseau, la couche (b) de protection représente, en taux de matière sèche, de 6 à 15 % du poids total du réseau et la couche (c) d'opacité représente, en taux de matière sèche, de 4 à 15 % du poids total du réseau.

11. Réseau selon la revendication 9 ou 10, **caractérisé en ce que** la couche (c) ne recouvre que l'une des grandes faces du réseau, de façon à ce que le réseau présente une couleur différente sur chacune de ses faces.

12. Réseau selon l'une des revendications 1 à 11, **caractérisé en ce que** les fils des nappes sont associés par tissage.

13. Réseau selon l'une des revendications 1 à 12, **caractérisé en ce que** le facteur d'ouverture est compris entre 2 et 20 %, est de préférence de l'ordre de 5 % ou 3 %.

14. Procédé de fabrication d'un réseau, réalisé à partir d'au moins deux nappes de fils de verre croisés, associés pour former une grille ajourée de facteur d'ouverture déterminé, comprenant les étapes successives suivantes :
- réaliser un traitement (b) par trempage de la grille dans un bain contenant, en % en poids sur l'extrait sec :
○ 35 à 55 % de liant vinylique,
○ 5 à 25 % de liant polyuréthane
○ 20 à 50 % d'agent ignifugeant
○ 0,5 à 3 % d'agent anti-mousse
○ 0 à 0,5 % de pigments
sous la forme d'une émulsion/suspension aqueuse dont l'extrait sec représente de 27 à 47 %, puis passage de la grille ainsi traitée entre deux rouleaux et séchage et de façon à obtenir une couche de traitement (b) représentant, en taux de matière sèche, de 6 à 15 % du poids total du réseau,
- réaliser un traitement (c₁) par trempage de la grille traitée obtenue à l'étape précédente dans un bain contenant, en % en poids sur l'extrait sec :
○ 25 à 45 % de liant vinylique
○ 5 à 25 % de liant polyuréthane
○ 10 à 30 % d'agent ignifugeant
○ 20 à 40 % de dioxyde de titane
○ 0,5 à 3 % d'agent anti-mousse
○ 0 à 0,5 % de pigments autres que TiO₂
sous la forme d'une émulsion/suspension aqueuse dont l'extrait sec représente de 27 à 47 %, puis passage de la grille ainsi traitée entre deux rouleaux et séchage et de façon à obtenir une couche de traitement (c₁) représentant, en taux de matière sèche, de 4 à 15 % du poids total du réseau.

15. Procédé selon la revendication 14, **caractérisé en ce que** le traitement (c₁) est suivi d'un traitement (c₂) par enduction de la grille sur une seule de ses faces, avec une formulation contenant, en % sur l'extrait sec :
- 15 à 30 % de liant vinylique,
- 5 à 15 % de liant polyuréthane,
- 15 à 25 % d'agent ignifugeant,
- 40 à 55 % de dioxyde de titane,
- 2 à 5 % d'épaississant, par exemple du type copolymère acrylique,
- 0 à 0,5 % de pigments autres que TiO₂,
puis séchage, de façon à obtenir une couche de traitement (c₂) sur une seule des grandes faces de la grille, représentant en taux de matière sèche de 5 à 25 % du poids total du réseau, les pigments éventuellement présents dans chacun des traitements étant choisis de façon à ce que chacune des grandes faces de la grille soit de couleur différente.

16. Procédé de fabrication d'un réseau, réalisé à partir d'au moins deux nappes de fils de verre croisés, associés pour former une grille ajourée de facteur d'ouverture déterminé, comprenant les étapes successives suivantes :
- réaliser un traitement (a) par trempage du réseau dans un bain contenant un liant de teinture à raison de 30 à 99 % en poids sur l'extrait sec, un pigment à raison de 1 à 70 % en poids sur l'extrait sec, sous la forme d'une émulsion/suspension aqueuse dont l'extrait sec représente de 1 à 5 %, puis passage de la grille ainsi traitée entre deux rouleaux et séchage.
- réaliser un traitement (b) par trempage de la grille dans un bain contenant, en % en poids sur l'extrait sec :
○ 35 à 55 % de liant vinylique,
○ 5 à 25 % de liant polyuréthane
○ 20 à 50 % d'agent ignifugeant
○ 0,5 à 3 % d'agent anti-mousse
○ 0 à 0,5 % de pigments
sous la forme d'une émulsion/suspension aqueuse dont l'extrait sec représente de 27 à 47 %, puis passage de la grille ainsi traitée entre deux rouleaux et séchage et de façon à obtenir une couche de traitement (b) représentant, en taux de matière sèche, de 6 à 15 % du poids total du réseau,
- réaliser un traitement (c₂) par enduction de la grille sur une seule de ses faces, avec une formulation contenant, en % sur l'extrait sec :
- 15 à 30 % de liant vinylique,
- 5 à 15 % de liant polyuréthane,
- 15 à 25 % d'agent ignifugeant,
- 40 à 55 % de dioxyde de titane,
- 2 à 5 % d'épaississant, par exemple du type copolymère acrylique,
- 0 à 0,5 % de pigments autres que TiO_{2,}
puis séchage, de façon à obtenir une couche de traitement (c₂) sur une seule des grandes faces de la grille, représentant en taux de matière sèche de 5 à 25 % du poids total du réseau, les pigments éventuellement présents dans chacun des traitements étant choisis de façon à ce que chacune des grandes faces de la grille soit de couleur différente.

17. Procédé selon la revendication 15 ou 16, **caractérisé en ce que** la formulation correspondant au traitement (c₂) présente une viscosité, mesurée à température ambiante 23° C ±3° C à l'aide d'un appareil de type Brookfield, comprise entre 4000 et 8000 cps.

18. Procédé selon l'une des revendications 14 à 17, **caractérisé en ce que** l'agent anti-mousse utilisé dans les bains correspondant au traitement (b) et éventuellement au traitement (c₁) est un polysiloxane, de préférence le BYK®-094.

19. Procédé selon l'une des revendications 14 à 18, **caractérisé en ce que** le bain correspondant au traitement (b) présente une viscosité, mesurée à température ambiante 23°C ±3°C à l'aide d'un appareil de type Brookfield, comprise entre 100 et 300 cps.

20. Procédé selon l'une des revendications 14, 15, 18 ou 19, **caractérisé en ce que** le bain correspondant au traitement (c₁) présente une viscosité, mesurée à température ambiante 23°C ±3°C à l'aide d'un appareil de type Brookfield, comprise entre 200 et 400 cps.

21. Procédé selon l'une des revendications 14, 15, 18 à 20, **caractérisé en ce que** le traitement (b) est précédé d'un traitement (a) réalisé par trempage du réseau dans un bain contenant un liant de teinture à raison de 30 à 99 % en poids sur l'extrait sec, un pigment à raison de 1 à 70 % en poids sur l'extrait sec, sous la forme d'une émulsion/suspension aqueuse dont l'extrait sec représente de 1 à 5 %, puis passage de la grille ainsi traitée entre deux rouleaux et séchage.

22. Procédé selon l'une des revendications 14 à 21, **caractérisé en ce que** le bain correspondant au traitement (a) présente, par exemple, une viscosité, mesurée à température ambiante 23°C ±3°C à l'aide d'un appareil de type Brookfield, comprise entre 0 et 10 cps.

## Patentansprüche

1. Netz zur Bildung eines lichtdämpfenden Schutzschirms, bestehend aus wenigstens zwei Lagen aus gekreuzten Glasfäden, die miteinander verbunden sind, um ein durchbrochenes Gitter mit bestimmtem Öffnungsfaktor, das mit einer polymerartigen Beschichtung überzogen ist, zu bilden, **dadurch gekennzeichnet, dass** die polymerartige Beschichtung TiO₂-Partikel enthält und dass die Glasfäden durch wenigstens eine Schicht aus polymerem Bindemittel von den TiO₂-Partikeln getrennt sind.

2. Netz nach Anspruch 1, **dadurch gekennzeichnet, dass** die Beschichtung halogenfrei ist.

3. Netz nach Anspruch 1 oder 2, **dadurch gekennzeichnet, dass** die Beschichtung als Trockenmasseanteil 10 bis 33 % des Gesamtgewichts des Netzes ausmacht.

4. Netz nach einem der Ansprüche 1 bis 3, **dadurch gekennzeichnet, dass** die Polymerschicht, welche die Glasfäden von den TiO₂-Partikeln trennt, wenigstens 4 % des Gesamtgewichts des Netzes ausmacht.

5. Netz nach einem der Ansprüche 1 bis 4, **dadurch gekennzeichnet, dass** die TiO₂-Partikel einen mittleren Durchmesser von weniger als 100 µm, vorzugsweise weniger als 20 µm aufweisen.

6. Netz nach einem der Ansprüche 1 bis 5, **dadurch gekennzeichnet, dass** die Beschichtung umfasst:
- 90 bis 100 Gew.-% aus:
- 5 bis 20 Gew.-% TiO₂,
- 25 bis 35 Gew.-% Flammenhemmstoff und
- 50 bis 65 % polymeren Bindemitteln,
- und 0 bis 10 Gew.-% Pigment (anderes als TiO₂).

7. Netz nach einem der Ansprüche 1 bis 6, **dadurch gekennzeichnet, dass** die Beschichtung insbesondere als Bindemittel eine Mischung aus Acrylbindemittel und/oder aus Vinylbindemittel und aus Polyurethan-Bindemittel umfasst.

8. Netz nach einem der Ansprüche 1 bis 7, **dadurch gekennzeichnet, dass** die Beschichtung wenigstens zwei Schichten umfasst.

9. Netz nach Anspruch 8, **dadurch gekennzeichnet, dass** die Beschichtung wenigstens drei Schichten umfasst:
a. eine sogenannte Schicht (a) zum oberflächlichen Färben der Fadenlagen, die eventuell die Fäden über einen Teil ihrer Dicke imprägniert, welche dazu bestimmt ist, an dem Färben der das Netz bildenden Glasfäden beteiligt zu sein,
b. eine sogenannte Zwischenschutzschicht (b), welche dazu bestimmt ist, die das Netz bildenden Glasfäden zu schützen,
c. eine die Außenfläche des Netzes bildende sogenannte Opazitätsschicht (c), welche dazu bestimmt ist, die Glasfäden undurchsichtig zu machen.

10. Netz nach Anspruch 9, **dadurch gekennzeichnet, dass** die Färbungsschicht (a) als Trockenmasseanteil 0 bis 3 % des Gesamtgewichts des Netzes ausmacht, die Schutzschicht (b) als Trockenmasseanteil 6 bis 15 % des Gesamtgewichts des Netzes ausmacht und die Opazitätsschicht (c) als Trockenmasseanteil 4 bis 15 % des Gesamtgewichts des Netzes ausmacht.

11. Netz nach Anspruch 9 oder 10, **dadurch gekennzeichnet, dass** die Schicht (c) lediglich eine der großen Seiten des Netzes bedeckt, so dass das Netz auf jeder seiner Seiten eine andere Farbe aufweist.

12. Netz nach einem der Ansprüche 1 bis 11, **dadurch gekennzeichnet, dass** die Fäden der Lagen miteinander verwebt sind.

13. Netz nach einem der Ansprüche 1 bis 12, **dadurch gekennzeichnet, dass** der Öffnungsfaktor zwischen 2 und 20 % liegt, vorzugsweise in der Größenordnung von 5 % oder 3 % liegt.

14. Verfahren zur Herstellung eines Netzes, das aus wenigstens zwei Lagen aus gekreuzten Glasfäden ausgebildet ist, die miteinander verbunden sind, um ein durchbrochenes Gitter mit bestimmtem Öffnungsfaktor zu bilden, umfassend die folgenden aufeinanderfolgenden Schritte:
- Durchführen einer Behandlung (b) durch Eintauchen des Gitters in ein Bad, enthaltend, in Gew.-% in der Trockenmasse:
• 35 bis 55 % Vinylbindemittel,
• 5 bis 25 % Polyurethan-Bindemittel
• 20 bis 50 % Flammenhemmstoff
• 0,5 bis 3 % Schaumverhütungsmittel
• 0 bis 0,5 % Pigmente
in Form einer wässrigen Emulsion/Suspension, deren Trockenmasse 27 bis 47 % ausmacht, anschließend Durchlaufen des so behandelten Gitters zwischen zwei Rollen und Trocknen, um eine Behandlungsschicht (b) zu erhalten, die als Trockenmasseanteil 6 bis 15 % des Gesamtgewichts des Netzes ausmacht,
- Durchführen einer Behandlung (c₁) durch Eintauchen des bei dem vorhergehenden Schritt erhaltenen behandelten Gitters in ein Bad, enthaltend, in Gew.-% in der Trockenmasse:
• 25 bis 45 % Vinylbindemittel,
• 5 bis 25 % Polyurethan-Bindemittel
• 10 bis 30 % Flammenhemmstoff
• 20 bis 40 % Titandioxid
• 0,5 bis 3 % Schaumverhütungsmittel
• 0 bis 0,5 % andere Pigmente als TiO₂
in Form einer wässrigen Emulsion/Suspension, deren Trockenmasse 27 bis 47 % ausmacht, anschließend Durchlaufen des so behandelten Gitters zwischen zwei Rollen und Trocknen, um eine Behandlungsschicht (c₁) zu erhalten, die als Trockenmasseanteil 4 bis 15 % des Gesamtgewichts des Netzes ausmacht.

15. Verfahren nach Anspruch 14, **dadurch gekennzeichnet, dass** sich an die Behandlung (c₁) eine Behandlung (c₂) durch Beschichten des Gitters auf einer einzigen seiner Seiten anschließt, mit einer Formulierung, die in % in der Trockenmasse enthält:
• 15 bis 30 % Vinylbindemittel,
• 5 bis 15 % Polyurethan-Bindemittel,
• 15 bis 25 % Flammenhemmstoff,
• 40 bis 55 % Titandioxid,
• 2 bis 5 % Verdickungsmittel, beispielsweise vom Typ Acrylcopolymer,
• 0 bis 0,5 % andere Pigmente als TiO₂,
anschließend Trocknen, um eine Behandlungsschicht (c₂) auf einer einzigen der großen Seiten des Gitters zu erhalten, die als Trockenmasseanteil 5 bis 25 % des Gesamtgewichts des Netzes ausmacht, wobei die eventuell bei jeder der Behandlungen vorhandenen Pigmente derart gewählt sind, dass eine jede der großen Seiten des Gitters eine andere Farbe hat.

16. Verfahren zur Herstellung eines Netzes, das aus wenigstens zwei Lagen aus gekreuzten Glasfäden ausgebildet ist, die miteinander verbunden sind, um ein durchbrochenes Gitter mit bestimmtem Öffnungsfaktor zu bilden, umfassend die folgenden aufeinanderfolgenden Schritte:
- Durchführen einer Behandlung (a) durch Eintauchen des Netzes in ein Bad, enthaltend ein Färbebindemittel in einer Menge von 30 bis 99 Gew.-% in der Trockenmasse, ein Pigment in einer Menge von 1 bis 70 Gew.-% in der Trockenmasse, in Form einer wässrigen Emulsion/Suspension, deren Trockenmasse 1 bis 5 % ausmacht, anschließend Durchlaufen des so behandelten Gitters zwischen zwei Rollen und Trocknen,
- Durchführen einer Behandlung (b) durch Eintauchen des Gitters in ein Bad, enthaltend, in Gew.-% in der Trockenmasse:
• 35 bis 55 % Vinylbindemittel,
• 5 bis 25 % Polyurethan-Bindemittel
• 20 bis 50 % Flammenhemmstoff
• 0,5 bis 3 % Schaumverhütungsmittel
• 0 bis 0,5 % Pigmente
in Form einer wässrigen Emulsion/Suspension, deren Trockenmasse 27 bis 47 % ausmacht, anschließend Durchlaufen des so behandelten Gitters zwischen zwei Rollen und Trocknen, um eine Behandlungsschicht (b) zu erhalten, die als Trockenmasseanteil 6 bis 15 % des Gesamtgewichts des Netzes ausmacht,
- Durchführen einer Behandlung (c₂) durch Beschichten des Gitters auf einer einzigen seiner Seiten, mit einer Formulierung, die in % in der Trockenmasse enthält:
• 15 bis 30 % Vinylbindemittel,
• 5 bis 15 % Polyurethan-Bindemittel,
• 15 bis 25 % Flammenhemmstoff,
• 40 bis 55 % Titandioxid,
• 2 bis 5 % Verdickungsmittel, beispielsweise vom Typ Acrylcopolymer,
• 0 bis 0,5 % andere Pigmente als TiO₂,
anschließend Trocknen, um eine Behandlungsschicht (c₂) auf einer einzigen der großen Seiten des Gitters zu erhalten, die als Trockenmasseanteil 5 bis 25 % des Gesamtgewichts des Netzes ausmacht, wobei die eventuell bei jeder der Behandlungen vorhandenen Pigmente derart gewählt sind, dass eine jede der großen Seiten des Gitters eine andere Farbe hat.

17. Verfahren nach Anspruch 15 oder 16, **dadurch gekennzeichnet, dass** die der Behandlung (c₂) entsprechende Formulierung eine Viskosität, gemessen bei Raumtemperatur von 23 °C ± 3 °C mit Hilfe eines Gerätes vom Typ Brookfield, im Bereich zwischen 4000 und 8000 cPs aufweist.

18. Verfahren nach einem der Ansprüche 14 bis 17, **dadurch gekennzeichnet, dass** das Schaumverhütungsmittel, das bei den der Behandlung (b) und eventuell der Behandlung (c₁) entsprechenden Bädern verwendet wird, ein Polysiloxan, vorzugsweise BYK®-094 ist.

19. Verfahren nach einem der Ansprüche 14 bis 18, **dadurch gekennzeichnet, dass** das der Behandlung (b) entsprechende Bad eine Viskosität, gemessen bei Raumtemperatur von 23 °C ± 3 °C mit Hilfe eines Gerätes vom Typ Brookfield, im Bereich zwischen 100 und 300 cPs aufweist.

20. Verfahren nach einem der Ansprüche 14, 15, 18 oder 19, **dadurch gekennzeichnet, dass** das der Behandlung (c₁) entsprechende Bad eine Viskosität, gemessen bei Raumtemperatur von 23 °C ± 3 °C mit Hilfe eines Gerätes vom Typ Brookfield, im Bereich zwischen 200 und 400 cPs aufweist.

21. Verfahren nach einem der Ansprüche 14, 15, 18 bis 20, **dadurch gekennzeichnet, dass** der Behandlung (b) eine Behandlung (a) vorausgeht, die durch Eintauchen des Netzes in ein Bad, enthaltend ein Färbebindemittel in einer Menge von 30 bis 99 Gew.-% in der Trockenmasse, ein Pigment in einer Menge von 1 bis 70 Gew.-% in der Trockenmasse, in Form einer wässrigen Emulsion/Suspension, deren Trockenmasse 1 bis 5 % ausmacht, anschließend Durchlaufen des so behandelten Gitters zwischen zwei Rollen und Trocknen durchgeführt wird.

22. Verfahren nach einem der Ansprüche 14 bis 21, **dadurch gekennzeichnet, dass** das der Behandlung (a) entsprechende Bad beispielsweise eine Viskosität, gemessen bei Raumtemperatur von 23 °C ± 3 °C mit Hilfe eines Gerätes vom Typ Brookfield, im Bereich zwischen 0 und 10 cPs aufweist.

## Claims

1. A network, intended for forming a light attenuating screen, consisting of at least two sheets of crossed glass yarns and associated for forming an openwork grid with a determined opening factor and coated with a coating of polymeric nature, **characterized in that** the coating of polymeric nature contains TiO₂ particles, and **in that** the glass yarns are separated from the TiO₂ particles by at least one polymeric binder layer.

2. The network according to claim 1, **characterized in that** the coating is halogen-free.

3. The network according to claim 1 or 2, **characterized in that** the coating on a basis of dry material represents from 10 to 33% of the total weight of the network.

4. The network according to one of claims 1 to 3, **characterized in that** the polymeric layer separating the glass yarns from the TiO₂ particles represents at least 4% of the total weight of the network.

5. The network according to one of claims 1 to 4, **characterized in that** the TiO₂ particles have an average diameter of less than 100 µm, preferably less than 20 µm.

6. The network according to one of claims 1 to 5, **characterized in that** the coating includes:
- from 90 to 100% by weight of:
- from 5 to 20% by weight of TiO₂,
- from 25 to 35% by weight of flame retardant, and
- from 50 to 65% of polymeric binders,
- and from 0 to 10% by weight of pigment (other than TiO₂).

7. The network according to one of claims 1 to 6, **characterized in that** the coating comprises, notably as a binder, a mixture of acrylic binder and/or vinyl binder and of polyurethane binder.

8. The network according to one of claims 1 to 7, **characterized in that** the coating includes at least two layers.

9. The network according to one of claims 1 to 8, **characterized in that** the coating includes at least three layers:
a. a layer (a), said to be for surface dyeing the sheet of yarns, which optionally impregnates the yarns on a portion of their thickness, intended for participating in the dyeing of the constitutive glass yarns of the network,
b. a layer (b), said to be an intermediate protection, intended for protecting the constitutive glass yarns of the network,
c. a so-called opaque layer, forming the external surface of the network, intended for making the glass yarns opaque.

10. The network according to claim 9, **characterized in that** the dye layer (a), on a basis of dry material, represents from 0 to 3% of the total weight of the network, the protective layer (b), on a basis of dry material, represents from 6 to 15% of the total weight of the network and the opaque layer (c), on a basis of dry material, represents from 4 to 15% of the total weight of the network.

11. The network according to claim 9 or 10, **characterized in that** the layer (c) only covers one of the large faces of the network, so that the network has a different color on each of its faces.

12. The network according to one of claims 1 to 11, **characterized in that** the yarns of the sheets are combined by weaving.

13. The network according to one of claims 1 to 12, **characterized in that** the opening factor is comprised between 2 and 20%, is preferably of the order of 5% or 3%.

14. A method for manufacturing a network, made from at least two sheets of crossed glass yarns, associated in order to form an openwork grid with a determined opening factor, comprising the following successive steps:
- achieving a treatment (b) by soaking the grid in a bath containing, in percent by weight on the dry extract:
■ 35 to 55% of vinyl binder,
■ 5 to 25% of polyurethane binder,
■ 20 to 50% of flame retardant,
■ 0.5 to 3% of anti-foam agent,
■ 0 to 0.5% of pigments
as an aqueous emulsion/suspension, the dry extract of which represents from 27 to 47%, and then passing the thereby treated grid between two rollers and drying and so as to obtain a treatment layer (b) representing, on a basis of dry material, 6 to 15% of the total weight of the network,
- achieving a treatment (c₁) by soaking the treated grid obtained in the previous step in a bath containing, in percent by weight, on the dry extract:
■ 25 to 45% of vinyl binder,
■ 5 to 25% of polyurethane binder,
■ 10 to 30% of flame retardant,
■ 20 to 40% of titanium dioxide,
■ 0.5 to 3% of anti-foam agent,
■ 0 to 0.5% of pigments other than TiO₂
as an aqueous emulsion/suspension, the dry extract of which represents from 27 to 47%, and then passing the thereby treated grid between two rollers and drying and so as to obtain a treatment layer (c₁) representing, on a basis of dry material, 4 to 15% of the total weight of the network.

15. The method according to claim 14, **characterized in that** the treatment (c₁) is followed by a treatment (c₂) by coating the grid on only one of its faces, with a formulation containing, in percent, on the dry extract:
- 15 to 30% of vinyl binder,
- 5 to 15% of polyurethane binder,
- 15 to 25% of flame retardant,
- 40 to 55% of titanium dioxide,
- 2 to 5% of thickener, for example of the acrylic copolymer type,
- 0 to 0.5% of pigments other than TiO₂,
and then drying, so as to obtain a treatment layer (c₂) on only one of the large faces of the grid, representing, on a basis of dry material, 5 to 25% of the total weight of the network, the pigments optionally present in each of the treatments being selected so that each of the large faces of the grid has a different color.

16. A method for manufacturing a network, made from at least two sheets of crossed glass yarns, associated so as to form an openwork grid with a determined opening factor, comprising the following successive steps:
- achieving a treatment (a) by soaking the network in a bath containing a dye binder in a proportion from 30 to 99% by weight on the dry extract, a pigment in a proportion from 1 to 70% by weight on the dry extract, as an aqueous emulsion/suspension, the dry extract of which represents from 1 to 5%, and then passing the thereby treated grid between two rollers and drying,
- achieving a treatment (b) by soaking of the grid in a bath containing, in percent by weight on the dry extract:
■ 35 to 55% of vinyl binder,
■ 5 to 25% of polyurethane binder,
■ 20 to 50% of flame retardant,
■ 0.5 to 3% of anti-foam agent,
■ 0 to 0.5% of pigments
as an aqueous emulsion/suspension, the dry extract of which represents from 27 to 47%, and then passing the thereby treated grid between two rollers and drying and so as to obtain a treatment layer (b) representing, on a basis of dry material, 6 to 15% of the total weight of the network,
- achieving a treatment (c₂) by coating the grid on only one of its faces, with a formulation containing, in percent, on the dry extract:
- 15 to 30% of vinyl binder,
- 5 to 15% of polyurethane binder,
- 15 to 25% of flame retardant,
- 40 to 55% of titanium dioxide,
- 2 to 5% of thickener, for example of the acrylic copolymer type,
- 0 to 0.5% of pigments other than TiO₂,
and then drying, so as to obtain a treatment layer (c₂) on only one of the large faces of the grid, representing on the basis of dry material from 5 to 25% of the total weight of the network, the pigments, optionally present in each of the treatments, being selected so that each of the large faces of the grid has a different color.

17. The method according to claim 15 or 16, **characterized in that** the formulation corresponding to the treatment (c₂) has a viscosity, measured at room temperature 23°C ± 3°C by an apparatus of the Brookfield type, comprised between 4,000 and 8,000 cps.

18. The method according to one of claims 14 to 17, **characterized in that** the antifoam agent used in the baths corresponding to the treatment (b) and optionally to the treatment (c₁) is a polysiloxane, preferably BYK®-094.

19. The method according to one of claims 14 to 18, **characterized in that** the bath corresponding to the treatment (b) has a viscosity, measured at room temperature 23°C ± 3°C by an apparatus of the Brookfield type, comprised between 100 and 300 cps.

20. The method according to one of claims 14, 15, 18 or 19, **characterized in that** the bath corresponding to the treatment (c₁) has a viscosity, measured at room temperature 23°C ± 3°C by an apparatus of the Brookfield type, comprised between 200 and 400 cps.

21. The method according to one of claims 14, 15, 18 to 20, **characterized in that** the treatment (b) is preceded with a treatment (a) carried out by soaking the network in a bath containing a dye binder in a proportion from 30 to 99% by weight on the dry extract, a pigment in a proportion from 1 to 70% by weight on the dry extract, as an aqueous emulsion/suspension, the dry extract of which represents 1 to 5%, and then passing the thereby treated grid between two rollers and drying.

22. The method according to one of claims of 14 the 21, **characterized in that** the bath corresponding to the treatment (a) for example has a viscosity, measured at room temperature 23°C ± 3°C by an apparatus of the Brookfield type, comprised between 0 and 10 cps.
